# EUROPÄISCHE PATENTSCHRIFT

(11) **EP 0 897 408 B1**
(45) Veröffentlichungstag und Bekanntmachung des Hinweises auf die Patenterteilung: **27.06.2001**
(21) Anmeldenummer: 97921692.6
(22) Anmeldetag: 22.04.1997
(51) Int. Cl.: C08J 3/02, C08L 63/00, C08L 31/04, C09D 5/44

(54) **MIT COPOLYMEREN DES VINYLACETATS MODIFIZIERTE IN WASSER DISPERGIERBARE EPOXIDHARZE UND DEREN VERWENDUNG IN ELEKTROTAUCHLACKEN**
WATER-DISPERSIBLE EPOXY RESINS MODIFIED WITH VINYL ACETATE COPOLYMERS AND THEIR USE IN ELECTROPHORETIC PAINT
RESINE EPOXYDE DISPERSIBLE DANS L'EAU MODIFIEE PAR DES COPOLYMERES D'ACETATE DE VINYLE ET LEUR UTILISATION DANS LES PEINTURES PAR ELECTROPHORESE

(30) Priorität: 08.05.1996 DE 19618379
(43) Veröffentlichungstag der Anmeldung: 24.02.1999
(73) Patentinhaber: BASF Coatings Aktiengesellschaft, 48165 Münster (DE)
(72) Erfinder: REUTER, Hardy, D-48167 Münster (DE); JOUCK, Walter, D-48167 Münster (DE); OTT, Günther, D-48167 Münster (DE); GROSSE BRINKHAUS, Karl-Heinz, D-48301 Nottuln (DE)
(74) Vertreter: Fitzner, Uwe, Dr.
(86) Internationale Anmeldenummer: EP9702027
(87) Internationale Veröffentlichungsnummer: WO9742254

(56) Entgegenhaltungen:
- EP-A- 0 638 606
- BE-A- 615 938
- NL-C- 80 981
- US-A- 3 098 054

## Beschreibung

### Gebiet der Erfindung

Die Erfindung betrifft in Wasser dispergierbare Kunstharze auf Basis von Mischungen aus Copolymerisaten (B), enthaltend Vinylacetat-Einheiten, sowie mindestens eine Einheit ausgewählt aus der Gruppe der Vinylalkohol-, Vinylacetal- und Ethylen-Einheiten, mit Epoxidharzen (A) als Bindemittel zur Verwendung in Elektrotauchlackbädern.

Beschichtungen, die die genannten Kunstharze enthalten, weisen einen ausgezeichneten Korrosionschutz, insbesondere an Kanten von Substraten, sowie hervorragende Widerstandsfähigkeit gegen mechanische Beanspruchung, wie beispielsweise Steinschlag, auf.

### Stand der Technik

Die Elektrotauchlackierung ist ein hinreichend bekanntes Verfahren zur Beschichtung der Oberfläche elektrisch leitender Gegenstände (vergleiche dazu beispielsweise: Glasurit Handbuch Lacke und Farben, Curt R. Vincentz Verlag, Hannover, 1984, Seiten 374 bis 384 und Seiten 457 bis 462, sowie DE-A-35 18 732, DE-A-35 18 770, EP-A-0 040 090, EP-A-0 012 463, EP-A-0 259 181, EP-A-0 433 783 und EP-A-0 262 069). Das Verfahren wird zur Beschichtung von Objekten aus Metall, insbesondere zur Grundierung von Automobilkarosserien, oder auch zur Beschichtung leitfähiger Kunststoffe eingesetzt.

Die bei der Elektrotauchlackierung verwendeten Lacke enthalten als Bindemittel in der Regel aminogruppen- oder carboxylgruppenhaltige Kunstharze, wobei durch die Neutralisation der Amino- oder der Carboxylgruppen eine Wasserdispergierbarkeit erzielt wird. Spezielle Anreibeharze, und gegebenenfalls weitere, nicht wasserdispergierbare Bestandteile, wie Polymere, Weichmacher, Pigmente, Füllstoffe, Additive und Hilfsstoffe können weitere Bestandteile der Elektrotauchlacke sein. Die in den Elektrotauchlacken eingesetzten Vernetzungsmittel sind entweder nicht wasserdispergierbar oder können wasserdispergierbar sein, wobei die Elektrotauchlacke fremdvernetzend, oder auch selbstvernetzend oder unter Kondensation härtbar sind.

Durch Modifikation der Bindemittel, Auswahl der Vernetzer und Variation der Zusammensetzung der Bestandteile des Elektrotauchlacks werden die Eigenschaften der Lackierung, wie z.B. Korrosionschutz, Haftung und Verlauf beeinflußt.

So sind insbesondere Elektrotauchlacke bekannt, bei denen durch Zusatz von Polymer-Mikroteilchen oder suspendierten bzw. eindispergierten Polymerpulvern der Korrosionschutz, speziell an Kanten, die Haftung, insbesondere die Schlagfestigkeit und der Verlauf günstig beeinflußt werden sollen.

So wird in der EP-A-0 259 181 empfohlen, die an Kanten des lackierten Substrats zu beobachtende erhöhte Anfälligkeit gegenüber Korrosion aufgrund einer unzureichend dicken Lackschicht durch Zusatz von Polymer-Mikrogelen zu beheben, wobei die Polymer-Mikroteilchen durch einen Erweichungspunkt, der mindestens 10 Grad C über der Badtemperatur liegt, durch einen Löslichkeitsparameter, der sich um nicht mehr als 1,0 vom Löslichkeitsparameter des abscheidbaren Kunstharzes unterscheidet, durch einen Brechungsindex, der um 0,02-0,3 vom Brechungsindex des abscheidbaren Kunstharzes abweicht, durch eine Vernetzungsdichte von 0,01-5,05 mmol/g charakterisiert werden, und wobei zum Beispiel Poly(meth)acrylat-Copolymerisate in Kombination mit ethylenisch ungesättigten Vinylverbindungen Bestandteil solcher Mikrogele sein können.

In DE-B-26 50 611, EP-A-0 052 831, DE-A-39 40 782, EP-A-0 433 783, SU-A-436890, JP-A-53094346, JP-A-79028410 und JP-A-0624820 werden Elektrotauchlack-Beschichtungsmittel mit suspendierbaren oder eindispergierbaren Kunststoffpulvern beschrieben, welche überwiegend frei von ionischen Gruppen sind, gegebenenfalls beim Einbrennen schmelzen können, unvernetzt oder vernetzt sind, wobei die Beschichtungsmittel zusätzlich die für Elektrotauchlackierungen typischen wasserdispergierbaren Kunstharze enthalten. Die Teilchengrößen solcher Kunststoffpulver können hierbei deutlich die Teilchengrößen der wasserdispergierbaren Kunstharze bekannter Elektrotauchlacke überschreiten: der durchschnittliche Teilchendurchmesser in der JP-A-0624820 liegt bei 1 bis 50 Mikrometer, in der DE-A-39 40 782 bzw. EP-A-0 433 bei 0,1 bis 100 Mikrometer.
Beispiele für solche pulverförmigen Kunststoffe sind Polyester, Polyolefine, Polystyrol, Poly(meth)acrylate, Polyurethane, Polyamide, Polyvinylchlorid, Poly(meth)acrylnitril, Polyoxymethylen, Polyvinylalkohol,
Butyral-Harze, Ethylen-Vinylacetat-Copolymerisate, Acrylnitril-Styrol-Copolymerisate, Acrylnitril-Styrol-Butadien-Copolymerisate, Polyethylenterephthalat, Polybutylenterephthalat, vernetzte Harnstoff-Aldehyd-, Triazin-Aldehyd-,
Phenol-Aldehyd-Harze, Epoxidharze, oder Celluloseacetat.

Daneben sind in SU-A-661637, SU-A-998592 und SU-A-310952 Überzüge beschrieben, die nach kataphoretischer Abscheidung aus nicht-wässrigen Suspensionen von Kunststoffpulvern entstehen, wobei als Medium aliphatische Alkohole, wie Isopropanol, oder Tetrachlormethan benutzt werden, und Leitsalze, wie Amoniumthiocyanat, zugesetzt werden können. Als Kunstoffpulver werden Polyvinylbutyrale eingesetzt.

Diese Überzuge zeichnen sich durch die bei lösungsmittelhaltigen Einschicht-Systemen auf Basis Polyvinylacetal bekannten Haftungseigenschaften auf metallischen Substraten, chemischen Beständigkeit und mechanischen Eigenschaften aus.

Der Zusatz der in den EP-A-0 259 181, DE-B-26 50 611, EP-A-0 052 831, EP-A-0 433 783, SU-A-436890, JP-A-53094346, JP-A-79028410 und JP-A-0624820 beschriebenen Polymerteilchen zu wässrigen Elektrotauchlacken führt in manchen Fällen zur Verbesserung der Kantenabdeckung oder des Steinschlagschutzes. Dahingegen ist der Korrosionschutz der abgeschiedenen Elektrotauchlackfilme, speziell an den Kanten, trotz der verbesserten Kantenabdeckung unzureichend.
Nachteilige Nebeneffekte der Zugabe von Kunststoffpulver sind eine Verschlechterung des Umgriffs der Elektrotauchlacke, der Haftung zum Substrat und/oder zu nachfolgenden Beschichtungen, wie überlackierte Lackschichten oder PVC-Unterbodenschutz, Verschlechterung der mechanischen Eigenschaften, wie Flexibilität, Dehnbarkeit, Bruch- und Schlagfestigkeit, schlechtere Fließeigenschaften und eine drastische Verschlechterung des Verlaufs.
Ein weiterhin wesentlicher Nachteil der in den Patentschriften EP-A-0 259 181, DE-B-26 50 611, EP-A-0 052 831, EP-A-0 433 783, SU-A-436890, JP-A-53094346, JP-A-79028410, JP-A-0624820 SU-A-661637, SU-A-998592 und SU-A-310952 beschriebenen wässrigen und nicht-wässrigen Formulierungen ist die mangelhafte Stabilität der Lacke, die zur Sedimentation neigen. Dabei kann es in wässrigen Elektrotauchlacken zur massiven Belegung der Ultrafiltrationsmembranen mit grobteiligen Kunstoffteilchen kommen.
Beschichtungsmittel, welche durch Mischung eines Epoxidharzes mit einem Polyvinylacetatpolymerisat erhältliche Zusammensetzungen enthalten, sind bekannt. Solche Beschichtungsmittel werden z.B. in der BE-A-615938, der EP-A-638606, der NL-A80981 und der US-A-3098054 beschrieben. Die Verwendung solcher Beschichtungsmittel in Elektrotauchlacken wurde jedoch bisher nicht beschrieben.

### Aufgabe und Lösung

Die der vorliegenden Erfindung zugrundeliegende Aufgabe bestand also in der Bereitstellung von kathodisch oder anodisch abscheidbare Kunstharze enthaltenden wäßrigen Elektrotauchlacken, die Lackfilme mit gegenüber dem Stand der Technik verbesserten Eigenschaften liefern.
Mit den aufzufindenden Elektrotauchlacken sollten insbesondere Lackfilme erhalten werden, die aufgrund verbesserter Rheologie die Kanten des lackierten Substrats gut abdecken, Überzüge mit guten mechanischen Eigenschaften, wie Schlagzähigkeit (in Hinblick auf einen guten Steinschlagschutz), liefern, insbesondere auch bei Lacksystemen ohne Pigmentzusätzen.

Diese Aufgabe wird überraschenderweise durch Elektrotauchlacke gelöst, enthaltend eine Bindemittelkomponente BM, hergestellt durch intensives Mischen in einem Lösungsmittel und/oder in der Schmelze von:

| | | |
|---|---|---|
| (A) | 1 bis 99,9 Gew.-% | eines Epoxidharzes und |
| (B) | 0,1 bis 99 Gew.-% | eines Copolymerisats aus Vinylacetat und mindestens einer Komponente, ausgewählt aus der Gruppe Vinylalkohol, Vinylacetal und Ethylen. |

Vorzugsweise wird das Mischen der Komponenten (A) und (B) bei Temperaturen zwischen 15 und 250 Grad C, bevorzugt zwischen 70 und 200 Grad C, in der Gegenwart von Epoxy-Ringöffnungskatalysatoren durchgeführt. Als Epoxy-Ringöffnungskatalysatoren bevorzugt werden tertiäre Amine oder Neutralsalze.

Bevorzugte Bindemittel BM werden erhalten durch anschließende teilweise oder vollständige Umsetzung der nach dem Mischvorgang verbleibenden Epoxygruppen des Epoxidharzes A) mit amin- oder carboxylgruppenhaltigen Verbindungen, welche nach der Umsetzung mit den Epoxygruppen durch Neutralisation in ionische Gruppen überführt werden können.

In einer bevorzugten Ausführungsform der Erfindung wird das ionische Gruppen aufweisende Bindemittel BM in einem weiteren Verfahrensschritt in Wasser dispergiert.

Die resultierenden stabilen wäßrigen Dispersionen des Bindemittels BM werden als Bestandteil von Elektrotauchlacken eingesetzt, wobei in solchen Systemen die Komponente (A) des Bindemittels vorzugsweise ein Epoxidharz mit einem Epoxidäquivalentgewicht zwischen 170 und 10.000 g/eq ist, wobei das Epoxidharz besonders bevorzugt ein Glycidylether eines cyclischen Polyols, ganz besonders bevorzugt eines Polyphenols, und/oder dessen Umsetzungsprodukt mit aliphatischen und/oder alicyclischen Hydroxylverbindungen ist.

Weiterhin bevorzugt ist das Copolymerisat (B) aufgebaut aus:
(b1)0 bis 5000 Monomereinheiten Alkylvinylacetal der Formel I: 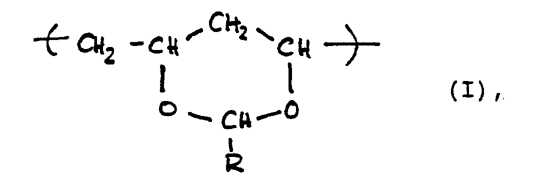 mit R für einen C1- bis C11-Alkylrest,
(b2)3 bis 6500 Monomereinheiten Vinylacetat,
(b3)0 bis 12500 Monomereinheiten Vinylalkohol und
(b4)0 bis 20000 Monomereinheiten Ethylen.

Vorzugsweise werden die das erfindungsgemäße Bindemittel BM enthaltenden Elektrotauchlacke, zur Herstellung schlagfester Lackaufbauten, insbesondere steinschlagfeste Lackaufbauten für Kraftfahrzeuge, eingesetzt, wobei das vorzugsweise elektrisch leitende Substrat zunächst mit dem erfindungsgemäßen Lack, anschließend mit üblichen Füllern und abschließend mit üblichen Deck- und/oder Klarlacken beschichtet wird, wobei die Lackschichten einzeln oder gemeinsam eingebrannt werden.

Solchermaßen hergestellte Lackaufbauten zeichnen sich durch einen hohen Steinschlagschutz und durch eine deutlich reduzierte Kantenkorrosion aus.

### Durchführung der Erfindung

### Die Komponente (A) des Bindemittels BM

Als Epoxidharze (A) können alle niedermolekularen sowie höhermolekularen Polymere verwendet werden, sofern sie im Mittel mehr als eine Epoxygruppe pro Molekül enthalten. Bevorzugt sind Epoxidverbindungen mit zwei oder mehr Epoxygruppen pro Molekül.

Bevorzugte Epoxide (A) sind Polyglycidylether von cyclischen Polyolen, wobei besonders bevorzugt Epoxide Polyglycidylether von Polyphenolen, insbesondere von Bisphenol-A oder Bisphenol-F, zum Einsatz kommen. Diese Polyepoxide können durch Veretherung eines Polyphenols mit einem Epihalogenhydrin oder einem Dihalogenhydrin, wie Epichlorhydrin oder Dichlorhydrin in Gegenwart von Alkali in an sich bekannter Weise hergestellt werden.
Beispiele für Polyphenole sind: 2,2-Bis(4-hydroxyphenyl)propan, 1,1-Bis-(4-hydroxyphenyl)ethan, 2-Methyl-1,1-bis(4-hydroxyphenyl)-propan, 2,2-Bis(4-hydroxy-3-tert.-butylphenyl)propan, Bis-(2-hydroxynaphthyl)methan und 1,5-Dihydroxy-3-naphthalin. Beispiele für weitere cyclische Polyole sind cycloaliphatische Polyole, wie 1,2-Cyclohexandiol, 1,4-Cyclohexandiol, 1,2-Bis(hydroxymethyl)cyclohexan, 1,3-Bis(hydroxymethyl)cyclohexan und hydriertes Bisphenol A. Darüber hinaus können oxyalkylierte Addukte, wie Ethylen- und Propylenoxidaddukte von diesen alicyclischen Polyolen und Polyphenolen verwendet werden.

Weiterhin als Epoxidharze (A) eingesetzt werden können Polyglycidylether von mehrwertigen Alkoholen, wie beispielsweise Ethylenglykol, Diethylenglykol, Triethylenglykol, 1,2-Propylenglykol, 1,3-Propylenglykol, 1,4-Butylenglykol und 1,5-Pentandiol.

Auch Epoxide, die man durch Epoxidierung einer olefinisch ungesättigten alicyclischen Verbindung erhält, sind als Epoxidharze (A) geeignet. Derartige Epoxidharze (A) schließen Diepoxide oder höhere Epoxide und auch deren Mischungen ein, die eine oder mehrere Monoepoxide enthalten. Diese Epoxide werden durch Epoxidierung von alicyclischen Olefinen erhalten, z.B. mit Sauerstoff und ausgewählten Metallkatalysatoren, mit Perverbindungen, wie beispielsweise Perbenzoesäure, mit Acetaldehydmonoperacetat oder Peressigsäure. Beispiele für solche Epoxide sind 1.5-Diepoxycyclooctan und Isomere des Cyclopentadiendioxids.
Ebenfalls eingesetzt werden können Epoxidharze A) hergestellt durch die partielle Epoxidierung von Polydienen und deren Copolymerisaten. Beispielhaft seien teilepoxidiertes Polybutadien und Polyisopren genannt.

Eine weitere geeignete Klasse von Epoxidharzen (A) sind Polyglycidylether von phenolischen Novolakharzen oder ähnlichen Phenolharzen.

Die Synthese der Epoxidharze (A) wird nach bekannten Verfahren des Standes der Technik durchgeführt.

Bei der Herstellung von Epoxidharzen vom Bisphenol-A- oder Bisphenol-F-Typ findet dabei zwischen den Epoxygruppen und den phenolischen Hydroxylgruppen eine bei gewählter Katalyse weitgehend nebenreaktionsfreie Umsetzung statt. Dazu wird in typischer Weise ein Epoxidharz auf Basis Bisphenol-A oder -F und ein Phenol in Gegenwart eines geeigneten Katalysators, wie Triphenylphosphin, oder eines Phosphoniumsalzes, beispielsweise Ethyltriphenylphosphoniumiodid, umgesetzt. Als Phenole können Monophenole und/oder Polyphenole verwandt werden, wobei alkyl- und alkoxysubstituierte Phenole einbezogen sind. Beispiele für Monophenole sind: Phenol, 2-Hydroxytoluol, 3-Hydroxytoluol, 4-Hydroxytoluol, 2- tert-Butylphenol, 4- tert-Butylphenol, 2-tert-Butyl-4-methylphenol, 2-Methoxyphenol, 4-Methoxyphenol, 2-Hydroxybenzylalkohol, 4-Hydroxybenzylalkohol, Nonylphenol, Dodecylphenol, 1-Hydroxynaphthalin, 2-Hydroxynaphthalin, Biphenyl-2-ol, Biphenyl-4-ol sowie 2-Allylphenol. Als typische Vertreter von Polyphenolen werden beispielsweise Bisphenol-A oder Bisphenol F angesehen. Weitere Polyphenole sind beispielsweise: 1,4-Dihydroxybenzol, 1,3-Dihydroxybenzol, 1,2-Dihydroxybenzol, 2,2-Bis(4-hydroxyphenyl)propan, 1,1-Bis-(4-hydroxyphenyl)ethan, 2-Methyl-1,1-bis(4-hydroxyphenyl)propan, 2,2-Bis(4-hydroxy-3-tert butylphenyl)propan, 4,4-Dihydroxybenzophenon, 2,4-Dihydroxybenzophenon, 1,4-Dihydroxynaphthalin, Bis-(2-hydroxynaphthyl)methan und 1,5-Dihydroxy-3-naphthalin.
Dies kann in Abwesenheit (separat) oder gegebenenfalls Gegenwart von aliphatischen und/oder cycloaliphatischen Hydroxylverbindungen (in situ) erfolgen, bei Temperaturen von 80 bis 200 Grad C, vorzugsweise 100 bis 150 Grad C. Zur Umsetzung mit aliphatischen und/oder cycloaliphatischen Hydroxylverbindungen eignen sich prinzipiell alle Monoalkohole, Diole, Triole und Polyole, wobei Temperaturen von 80 bis 200 Grad C geeignet sind, vorzugsweise 100 bis 150 Grad C.

Bei der Verwendung der erfindungsgemäßen Bindemittel BM für kathodische Elektrotauchlacke werden durch den Einbau von Monoalkoholen in die Epoxidharze (A) Bindemittel erhalten, die sich durch eine zusätzliche Flexibilisierung auszeichnen. Daneben wird die Bildung dickerer Lackfilme gefördert, beziehungsweise die üblicherweise beobachtbare Einbuße in den Schichtdicken bei gleichzeitig niedrigeren nichtflüchtigen Anteil und/oder Verringerung des Weichmachergehalts kompensiert.
Geeignete Monoalkohole sind beispielsweise Methanol, Ethyl-, Propyl-, Isopropyl-, Butyl-, Isobutyl-, Amyl-, Isoamyl-, 2-Ethylbutyl-, Hexyl-, Heptyl-, Octyl-, 2-Ethylhexyl-, Nonyl-, 3,3,5-Trimethylhexyl- Isononyl-, Decyl-, Isodecyl-, Lauryl-, Isotridecyl-, Isohexadecyl-, Isooctadecyl- sowie Neopentylalkohol, 3,7-Dimethyl-3-octanol, 3-Cyclohexylpropanol, 2,4-Dimethylpentan-3-ol.
Ebenfalls sind ungesättigte Monoalkohole geeignet, wie beispielsweise Allylalkohol, 1-Buten-3-ol, 2-Methylbuten-3-ol-2, 3-Methylpenten-1-ol-3, Crotylalkohol, 9-Decen-1-ol, Zimtalkohol und 9-Octadecen-1-ol.
Als Monoalkohole geeignet sind weiterhin: Benzylalkohol, 1-Phenylethanol, 2-Phenylethanol, 4-Methylbenzylalkohol, 2-Phenylpropanol-1, Diphenylcarbinol und Phenylmethylcarbinol, cycloaliphatische Alkohole ,wie Cyclopentanol, Cyclohexanol und 4-tert-Butylcyclohexanol, Etheralkohole, wie Methylglykol, Ethylglykol, Butylglykol, Methyl-, Ethyl- und Butyldiglykol, Methyl-, Ethyl- und Butyltriglykol, Methyl-, Ethyl- und Butylpolyglykol sowie Hexylglykol, Hexyldiglykol, Phenylglykol, Phenyldiglykol, Methoxypropanol, Methoxybutanol, Phenoxypropanol und Phenoxybutanol, Polyoxyalkylenmonoole, wie Monoalkohole des Polyoxymethylens, Polyoxyethylens, Polyoxypropylens und Polyoxytetramethylens, beispielsweise Polyoxypropylene der Bezeichnung Tegomer ® H-3304 (Fa. Th. Goldschmidt AG), ethoxylierte oder propoxylierte Alkylphenole, wie TRITON ® X-15, TRITON ® X-35 oder TRITON ® X-405 (Fa. Rohm und Haas) und PLASTILIT ® 3060 (Fa. BASF AG), wobei die bevorzugten Molekulargewichte solcher Polyoxyalkylenmonoole im Bereich von 350 bis 6000 g/mol liegen, monofunktionelle Oligomere mit endständiger Hydroxylgruppe auf der Basis von Polybutadien, Polyisopren, den Copolymeren von Butadien und Isopren, den Copolymeren von Butadien oder Isopren mit Styrol, den Copolymeren von Butadien, Isopren und Styrol, deren hydrierten oder teilhydrierten Polymeren, insbesondere Blockcopolymere der genannten Typen, wie KRATON ® HPVM-1101, -1202 , KRATON ® HPVM-1301 (Fa. Shell ), Diole, wie bevorzugt Alkylenglykole, z.B. Ethylenglykol, Diethylenglykol, Triethylenglykol, Tetraethylenglykol, Propylenglykol, Dipropylenglykol, Butylenglykol und Neopentylglykol, Propan-1,2-diol, Propan-1,3-diol, Butan-1,4-diol, Butan-1,3-diol, 2-Butin-1,4-diol, Hexan-1,6-diol, Decan-1,10-diol, 1,4-Cyclohexandiol, 1,2-Cyclohexandiol, 1-Phenyl-1,2-ethandiol sowie Tetraphenyl-1,2-ethandiol, Polyoxyalkylenglykole, wie beispielsweise Polyoxymethylen-, Polyoxyethylen-, Polyoxypropylen- und Polyoxytetramethylenglykole, z.B. Polyoxyethylenglykol und Polyoxypropylenglykol PLURIOL ® E400, P900, P2000 (Fa. BASF AG), Copolymere, insbesondere Blockcopolymere, wie Blockcopolymere des Ethylenoxids und Propylenoxids, zum Beispiel PLURONIC ® PE3100, PE6100 (Fa. BASF AG), wobei die bevorzugten Molekulargewichte der Polyoxyalkylenglykole im Bereich von 350 bis 6800 g/mol liegen, difunktionelle Oligomere mit endständigen Hydroxylgruppen auf der Basis von Polybutadien, Polyisopren, den Copolymeren von Butadien und Isopren, den Copolymeren von Butadien oder Isopren mit Styrol, den Copolymeren von Butadien, Isopren und Styrol, deren hydrierten oder teilhydrierten Polymeren, insbesondere Blockcopolymere der genannten Typen, wie ® 45HT (Fa. Metallgesellschaft AG), KRATON ® HPVM-2202 oder KRATON ® WRC-91-102 (Fa. Shell).

Mehrwertige aliphatischen und/oder cycloaliphatische Hydroxylverbindungen eignen sich ebenfalls zur Herstellung des Epoxidharzes (A), wobei beispielhaft Trimethylolpropan, 1,2,6-Hexantriol, Pentaerythrit, Dipentaerythrit, Tripentaerythrit, Polypentaerythrit, Methylglukosid, Saccharose und deren Umsetzungsprodukte mit Ethylen- oder Propylenoxid bzw. Mischungen, wie zum Beispiel ethoxyliertes oder propoxyliertes Trimethylolpropan (POLYOL ® TP08, TP30; TS30 der Fa. Perstop Polyols), ethoxyliertes oder propoxyliertes Pentaerythrit (POLYOL ® PP30, PP50, PS 50 der Fa. Perstop Polyols) genannt werden.

### Die Komponente (B) des Bindemittels BM

Als Komponente (B) des Bindmittels werden erfindungsgemäß bevorzugt Copolymerisate bestehend aus:
(b1)0 bis 5000 Monomereinheiten Alkylvinylacetal der Formel I: 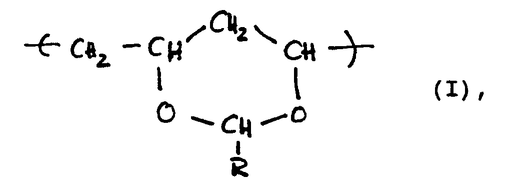 mit R für einen C1- bis C11-Alkylrest,
(b2)3 bis 6500 Monomereinheiten Vinylacetat,
(b3)0 bis 12500 Monomereinheiten Vinylalkohol und
(b4)0 bis 20000 Monomereinheiten Ethylen.
eingesetzt.

Beispielhaft für Verbindungen der Formel I seien genannt: Vinylacetale gebildet durch die Umsetzung von Acetaldehyd, Propionaldehyd oder Butyraldehyd mit Vinylalkohol.

Besonders bevorzugt sind Copolymerisate (B) bestehend aus:
(b1)3 bis 4600 Monomereinheiten Vinylacetal der Formel (I),
(b2)3 bis 6200 Monomereinheiten Vinylacetat und
(b3)0 bis 12100 Monomereinheiten Vinylalkohol,
wie beispielsweise MOWITAL ® -Typen der Fa. Hoechst AG bzw. PIOLOFORM ®-Typen der Fa. Wacker, z.B. MOWITAL ® B 20 H, B 30 H, B 30 T oder B 60 H, PIOLOFORM ® BN18, BL16, BL18, FN50 oder FN65,
und/oder
(b2)3 bis 6200 Monomereinheiten Vinylacetat,
(b3)0 bis 12100 Monomereinheiten Vinylalkohol und
(b4)3 bis 18000 Monomereinheiten Ethylen,
wie beispielsweise LUPOLEN ®-Typen der Fa. BASF AG, z.B. LUPOLEN ® V3510K oder alkalisch mit Natronlauge teilverseiftes LUPOLEN ® V3510K.

### Die Herstellung des erfindungsgemäßen Bindemittels BM

Zur Herstellung der erfindungsgemäßen Bindemittel BM werden die Komponenten (A) und (B) vor dem Einsatz des Bindemittels im Elektrotauchlack intensiv gemischt.
Das Mischen der Komponenten (A) und (B) kann in einem gemeinsamen Lösemittel oder in der Schmelze der Komponenten erfolgen, wobei die Mischtemperaturen bevorzugt zwischen 15 und 250 Grad C, besonders bevorzugt zwischen 70 und 200 Grad C liegen. Die Mischtemperaturen werden vorzugsweise, insbesondere beim Schmelzemischen der Komponenten, so gewählt, daß weder bei Komponente (A) noch bei Komponente (B) ein nennenswerter Molekulargewichtsabbau stattfindet.
Geeignete Mischaggregate sind beispielsweise Rührkessel oder Strömungsrohre für das Mischen der Komponenten (A) und (B) in einem gemeinsamen Lösemittel, sowie Extruder für das Mischen der Komponenten in der Schmelze.
Geeignete gemeinsame Lösemittel für die Komponenten (A) und (B) sind beispielsweise: aromatische Lösemittel, wie Toluol, Xylol oder Ethylbenzol, Dioxan sowie Dialkylenglykolderivate, wie Diethylenglykoldimethylether, Diethylenglykoldibutylether oder Dipropylenglykoldimethylether.
Vorzugsweise werden beim Mischen der Komponenten (A) und (B) Epoxy-Ringöffnungskatalyastoren in Mengen von 0,01 bis 0,8 Gew.-%, vorzugsweise 0,1 bis 0,5 Gew.-%, bezogen auf die Mischung aus (A) und (B), eingesetzt.
Als Epoxy-Ringöffnungskatalysatoren werden vorzugsweise tertiäre Amine oder Neutralsalze eingesetzt, wie beispielsweise: N,N-Dimethylbenzylamin, N-Methylmorpholin, N-Ethylmorpholin, N-Methylimidazol, Zinperchlorat oder Magnesiumperchlorat.

Für die Verwendung der erfindungsgemäßen Bindemittel BM in wässrigen Systemen ist es notwendig, ionische Gruppen in die Epoxidharzreaktionsprodukte (A) einzuführen. So kann man durch geeignete Maßnahmen Säuregruppen einführen, die nach Neutralisation mit Aminen ein wasserlösliches Harz ergeben. Für die weitverbreitete Elektrotauchlackierung metallischer Substrate wird bevorzugt die kathodische Elektrotauchlackierung eingesetzt. Hierbei trägt das Harz positive Ladungen. Dazu wird das Epoxidharzreaktionsprodukt (A) mit Aminen umgesetzt und durch anschließende Neutralisation mit Carbonsäuren die positiven Ladungen erzeugt.
Als Aminkomponente können primäre, sekundäre und tertiäre Amine oder Gemische aus diesen eingesetzt werden.
Primäre und sekundäre Amine können direkt an den Epoxidring angelagert werden. Tertiäre Amine können nur über eine weitere funktionelle Gruppe im Molekül eingebaut werden. Bevorzugt sind die verwendeten Amine wasserlöslich. Beispiele solcher Amine sind Mono- und Dialkylamine, wie Methylamin, Ethylamin, Propylamin, Butylamin, Dimethylamin, Diethylamin, Dipropylamin und Methylbutylamin. Geeignet sind weiterhin Alkanolamine, wie z.B. Methylethanolamin und Diethanolamin. Ferner sind als wasserlösliche Amine Dialkylaminoalkylamine, wie z.B. Dimethylaminoethylamin, Diethylaminopropylamin und Dimethylaminopropylamin, geeignet. Es können auch ketimingruppenhaltige Amine, wie beispielsweise das Methylisobutyldiketimin von Diethylentriamin eingesetzt werden. In den meisten Fällen werden niedermolekulare Amine verwendet, doch ist es auch möglich, höhermolekulare Monoamine anzuwenden. In gleicher Weise können auch Mischungen verwendet werden. Polyamine mit primären und sekundären Aminogruppen können in Form ihrer Ketimine mit den Epoxygruppen umgesetzt werden. Die Ketimine werden aus den Polyaminen in bekannter Weise hergestellt.
Die Amine können auch noch andere Gruppen enthalten, doch sollen diese die Umsetzung des Amins mit der Epoxidgruppe nicht stören und auch nicht zu einer Gelierung der Reaktionsmischung führen.
Bevorzugt werden primäre und sekundäre Amine eingesetzt.
Die Umsetzung des Amins mit dem epoxygruppenhaltigen Epoxidharzreaktionsprodukt (A) tritt häufig schon beim Vermischen der Edukte ein. Es kann aber auch eine Erwärmung auf erhöhte Temperaturen notwendig sein, beispielsweise auf 50 bis 150 Grad C. Indes sind Umsetzungen auch bei niedrigeren und höheren Temperaturen möglich.
Für die Umsetzung mit dem epoxygruppenhaltigen Epoxidharzreaktionsprodukt (A) sollte mindestens eine solche Menge an Amin verwendet werden, daß das Harz einen kationischen Charakter annimmt, d.h. daß es unter dem Einfluß einer Spannung in dem Beschichtungsbad zur Kathode wandert, wenn es durch Zugabe einer Säure löslich gemacht worden ist.
Die für die Wasserverdünnbarkeit und elektrische Abscheidung erforderlichen Ladungen können durch Protonierung mit wasserlöslichen Säuren, wie beispielsweise Borsäure, Ameisensäure, Milchsäure, Propionsäure, bevorzugt Essigsäure, erzeugt werden. Im allgemeinen ist es nur erforderlich, so viel Säure zuzugeben, daß das Produkt in Wasser dispergiert werden kann. Es kann aber auch so viel Säure verwendet werden, daß der theoretische Neutralisationsgrad von 100% überschritten wird.
Eine weitere Möglichkeit zur Einführung kationischer Gruppen besteht in der Umsetzung von Epoxidharzen (A) mit Aminsalzen, wie beispielsweise Salze von tertiären Aminen. Aminbestandteile von Amin-Säuresalzes sind beispielsweise Amin, die unsubstituiert oder substituiert wie im Falle des Hydroxylamins sein können, wobei die Substituenten die Umsetzung mit der Epoxygruppe des Epoxidharzreaktionsprodukts (A) nicht stören sollen und die Reaktionsmischung nicht gelieren soll. Bevorzugte Amine sind tertiäre Amine, wie Dimethylethanolamin, Triethylamin, Trimethylamin, Triisopropylamin und ähnliche.

Die in den erfindungsgemäßen Elektrotauchlacken enthaltenen kathodisch abscheidbaren Epoxidharze (A) sind in der Regel entweder selbstvernetzend und/oder werden mit einem Vernetzungsmittel oder einer Mischung aus Vernetzungsmitteln kombiniert.
Selbstvernetzbare Kunstharze sind erhältlich, indem in die Epoxidharzmoleküle (A) reaktive Gruppen eingeführt werden, die unter Einbrennbedingungen miteinander reagieren. Beispielsweise können in hydroxyl- und/oder aminogruppenhaltige Epoxidharze (A) blockierte Isocyanatgruppen eingeführt werden, die unter Einbrennbedingungen deblockieren und unter Ausbildung von vernetzten Lackfilmen mit den Hydroxyl- bzw. Aminogruppen reagieren. Selbstvernetzbare Epoxidharze (A) können auch durch Umsetzung eines hydroxyl- und/oder aminogruppenhaltigen Epoxidharzes mit einem teilblockierten Polyisocyanat, das im statistischen Mittel eine freie NCO-Gruppe pro Molekül enthält, erhalten werden.

### Die wäßrigen Elektrotauchlacke

Die das erfindungsgemäße Bindemittel BM enthaltenden wäßrigen Elektrotauchlacke können weiterhin im Prinzip alle für Elektrotauchlacke geeigneten Vernetzungsmittel wie z.B. Phenoplaste, polyfunktionelle Mannichbasen, Melaminharze, Benzoguanaminharze sowie blockierte Polyisocyanate und aktivierte Estergruppen enthaltende Verbindungen enthalten. Vorzugsweise werden blockierte Polyisocyanate als Vernetzungsmittel eingesetzt. Es können bei der Erfindung beliebige Polyisocyanate benutzt werden, bei denen die Isocyanatgruppen umgesetzt worden sind, so daß das gebildete blokkierte Polyisocyanat gegenüber Hydroxylgruppen und Aminogruppen bei Raumtemperatur beständig ist, bei erhöhter Temperatur, in der Regel im Bereich von etwa 90 bis etwa 300 Grad C, aber reagiert. Bei der Herstellung der blockierten Isocyanate können beliebige, für die Vernetzung geeignete organische Di- oder Polyisocyanate, wie üblicherweise aliphatische, cycloaliphatische oder aromatische Isocyanate, verwendet werden. Diese können auch Präpolymere sein, die sich beispielsweise von einem Polyol einschließlich Polyetherpolyols oder Polyesterpolyols ableiten.
Die Isocyanate können mit allen bekannten Blockierungsmitteln, wie Alkoholen, Phenolen, Oximen, Lactamen, Alkanolaminen, sekundären .Aminen und aromatischen Alkoholen blockiert werden, wie in den oben angeführten Patentdokumenten bereits ausführlich beschrieben (DE-A-35 18 732, DE-A-35 18 770, EP-A-0 040 090, EP-A-0 012 463, EP-A-0 259 181, EP-A-0 433 783, EP-A-0 262 069).

Die erfindungsmäßen wäßrigen Elektrotauchlacke können neben den oben beschriebenen Komponenten auch noch weitere an sich übliche Lackbestandteile wie z.B. organische Lösemittel, Netzmittel, Antikrateradditive sowie insbesondere Pigmente und Füllstoffe enthalten.
Als Pigmente können übliche Pigmente und Füllstoffe eingesetzt werden, wie beispielsweise Ruß, Titandioxid, feindisperses Siliciumdioxid, Aluminiumsilikat, Metalleffektpigmente, organische und anorganische Farbpigmente sowie Korrosionsschutzpigmente, wie Blei- oder Chromatverbindungen. Vorzugsweise werden die Pigmente in an sich bekannter Weise mit Polymerpulvern zu Pigmentpasten verarbeitet, in denen das erfindungsgemäße Bindemittel BM ebenfalls anwesend sein kann.

Der erfindungsgemäße Elektrotauchlack wird aus der oben beschriebenen wäßrigen Dispersion des Bindemittels BM und der Pigmentpaste hergestellt, wobei die Applikationsviskosität des Elektrotauchlacks im allgemeinen anschließend an die Zugabe der Pigmentpaste zur wäßrigen Dispersion des Bindemittels durch die Zugabe von entionisiertem Wasser eingestellt wird.
Bei den ebenfalls unter die Erfindung fallenden unpigmentierten Elektrotauchlacken entfällt selbstverständlich die Zugabe der Pigmentpaste.

Der nichtflüchtige Anteil der erfindungsgemäßen wäßrigen Elektrotauchlacke besteht zu 35 bis 100 Gew.-%, vorzugsweise 35 bis 90 Gew.-% aus dem kathodisch abscheidbaren Bindemittel BM oder einer Mischung aus kathodisch abscheidbaren Kunstharzen und aus dem Bindemittel BM, zu 0 bis 65 Gew.-%, vorzugsweise 10 bis 65 Gew.-% aus Vernetzungsmittel und zu 0 bis 60 Gew.-%, vorzugsweise 0 bis 35 Gew.-% Pigmenten und/oder Füllstoffen.

Der Feststoffgehalt der erfindungsgemäßen wäßrigen Elektrotauchlacke beträgt im allgemeinen 5 bis 40, vorzugsweise 10 bis 40, besonders bevorzugt 20 bis 40 Gew-%, bezogen auf den Lack.

Weiterhin umfaßt die Erfindung ein Verfahren zum Lackieren elektrisch leitfähiger Substrate, bei dem
(1) das elektrisch leitfähige Substrat in den erfindungsgemäßen wäßrigen Elektrotauchlack getaucht wird,
(2) das Substrat als Kathode geschaltet wird,
(3) durch Gleichstrom ein Film auf dem Substrat abgeschieden wird,
(4) das lackierte Substrat aus dem erfindungsgemäßen wäßrigen Elektrotauchlack entfernt wird und
(5) der abgeschiedene Lackfilm eingebrannt wird.

Bei der Abscheidung kann die angelegte Spannung zwischen 2 und 1000 V liegen. Typischerweise wird aber mit Spannungen zwischen 50 und 500 V gearbeitet. Die Stromdichte liegt in der Regel zwischen etwa 10 und 100 A/m². Im Verlauf der Abscheidung neigt die Stromdichte zum Abfallen. Sobald der Lackfilm auf dem Substrat abgeschieden ist, wird das lakkierte Substrat aus dem Elektrotauchlack entfernt und abgespült. Danach wird der abgeschiedene Lackfilm eingebrannt. Die Einbrenntemperaturen liegen üblicherweise bei 90 bis 200 Grad C, vorzugsweise bei 150 bis 180 Grad C und die Einbrenndauer liegt: im allgemeinen zwischen 10 und 60 Minuten, vorzugsweise zwischen 15 und 30 Minuten.

Mit dem erfindungsgemäßen Verfahren können im Prinzip alle elektrisch leitfähigen Substrate lackiert werden. Als Beispiele für elektrisch leitfähige Substrate werden Substrate aus Metall, wie Stahl, Aluminium, Kupfer und dergleichen genannt.

Die Erfindung wird in den folgenden Beispielen näher erläutert. Alle Angaben über Teile und Prozentsätze sind Gewichtsangaben, falls nicht ausdrücklich etwas anderes festgestellt wird.

### Beispiele:

### Beispiel 1: Herstellung des Vernetzungsmittels (V1)

In einem Reaktor, der mit einem Rührer, Rückflußkühler, Innenthermometer und Inertgaseinleitung ausgestattet ist, werden 10462 Teile Isomere und höherfunktionelle Oligomere auf Basis von 4,4'-Diphenylmethandiisocyanat mit einem NCO-Equivalentgewicht von 135 g/eq (Lupranat ® M20S der Fa. BASF AG; NCO-Funktionalität ca. 2,7; Gehalt an 2,2'- und 2,4'-Diphenylmethandiisocyanat unter 5%) unter Stickstoffatmosphäre vorgelegt. Man gibt 20 Teile Dibutylzinndilaurat zu und tropft 9626 Teile Butyldiglykol mit einer solchen Geschwindigkeit zu, daß die Produkttemperatur unter 60 Grad C bleibt. Gegebenenfalls muß gekühlt werden. Nach Ende der Zugabe wird die Temperatur weitere 60 Minuten bei 60 Grad C gehalten und ein NCO-Equivalentgewicht von 1120 g/eq bestimmt (bezogen auf Festanteile). Nach Anlösung in 7737 Teilen Methylisobutylketon und Zugabe von 24 Teilen Dibutylzinndilaurat werden 867 Teile geschmolzenes Trimethylolpropan in einer solchen Geschwindigkeit zugegeben, daß eine Produkttemperatur von 100 Grad C nicht überschritten wird. Nach Zugabeende läßt man weitere 60 Minuten nachreagieren. Bei der nachfolgenden Kontrolle sind keine NCO-Gruppen mehr nachweisbar. Man kühlt auf 65 Grad C ab und verdünnt gleichzeitig mit 963 Teilen n-Butanol und 300 Teilen Methylisobutylketon. Der Feststoffgehalt liegt bei 70,1% (1 Stunde bei 130 Grad C).

### Beispiel 2: Herstellung des Vorprodukts (AV1) der Aminkomponente (A1)

Aus einer 70 %igen Lösung von Diethylentriamin in Methylisobutylketon wird bei 110 bis 140 Grad C das Reaktionswasser azeotrop ausgekreist. Anschließend wird mit Methylisobutylketon verdünnt bis die Lösung ein Aminequivalentgewicht von 131 g/eq aufweist.

### Beispiel 3: Herstellung der wäßrigen Dispersionen D, enthaltend das erfindungsgemäße Bindemittel BM und das Vernetzungsmittel

### Beispiel 3.1: Herstellung der Dispersion D1

In einem Reaktor, der mit einem Rührer, Rückflußkühler, Innenthermometer und Inertgaseinleitung ausgestattet ist, werden 5101 Teile Epoxidharz auf Basis von Bisphenol A mit einem Epoxy-Equivalentgewicht (EEW) von 188 g/eq zusammen mit 1161 Teilen Bisphenol A, 278 Teilen Dodecylphenol, 344 Teilen p-Kresol, 1795 Teilen Komponente (B1) (MOWITAL ® B 30 T der Fa. Hoechst AG: Poly(vinylbutyral-co-vinylalkoholco-vinylacetat mit 69 bis 71 Gew.-% Vinylbutyral, 24 bis 26 Gew.-% Vinylalkohol und 3 Gew-% Vinylacetat) und 966 Teilen Xylol unter Stickstoffatmosphäre auf 125 Grad C aufgeheizt und 10 Minuten gerührt. Anschließend heizt man auf 130 Grad C und gibt 19 Teile N,N-Dimethylbenzylamin zu. Bei dieser Temperatur wird der Reaktionsansatz gehalten, bis das EEW einen Wert von 1026 g/eq erreicht hat.
Man gibt nun 6872 Teile des Vernetzungsmittels (V1) gemäß Beispiel 1 hinzu und hält bei 100 Grad C.
Eine halbe Stunde nach Vernetzerzugabe werden 174 Teile Butylglykol und 881 Teile sec-Butanol zugesetzt.
Unmittelbar anschließend wird eine Mischung von 424 Teilen des Vorprodukts (AV1) der Aminkomponente gemäß Beispiel 2 und 431 Teilen Methylethanolamin und in den Reaktor gegeben und der Ansatz auf 100 Grad C temperiert. Nach einer weiteren halben Stunde erhöht man die Temperatur auf 105 Grad C und gibt 132 Teile N,N-Dimethylaminopropylamin zu.
45 Minuten nach Aminzugabe setzt man 773 Teile Plastilit ® 3060 (Propylenglykolverbindung der Fa. BASF AG) und 45 Teile des Additivs K2000 (Polyether der Fa. Byk Chemie) zu, verdünnt mit einem Gemisch von 431 Teilen Propylenglycolphenylether und 173 Teilen sec-Butanol, und kühlt gleichzeitig rasch auf 95 Grad C ab.
Nach 10 Minuten werden 14933 Teile des Reaktionsgemischs in ein Dispergiergefäß überführt. Dort gibt man portionsweise unter Rühren 481 Teile Milchsäure (88%ig in Wasser), gelöst in 6964 Teilen deionisiertem Wasser zu. Anschließend wird 20 Minuten homogenisiert, bevor mit weiteren 12600 Teilen entionisiertem Wasser in kleinen Portionen weiter verdünnt wird.
Durch Destillation im Vakuum werden die flüchtigen Lösemittel entfernt und anschließend mengengleich durch deionisiertes Wasser ersetzt.

Die Dispersion D1 besitzt folgende Kennzahlen:

| | | |
|---|---|---|
| Feststoffgehalt | 32,7% | (1 Stunde bei 130 Grad C) |
| Basengehalt | 0,611 | Milliequivalente/g Festkörper |
| Säuregehalt | 0,406 | Milliequivalente/g Festkörper |
| pH | 5,8 | |
| Teilchengröße | 68 nm | |
| (Massemittel aus Photonen-Korrelations-Spektroskopie) | | |

### Beispiel 3.2: Herstellung der Dispersion D2

Es wird verfahren wie bei der Herstellung der Dispersion Dl in Beispiel 3.1 mit dem Unterschied, daß die Komponente (B1) durch die Komponente (B2) (MOWITAL ® B 30 H der Firma Hoechst AG: Poly(vinylbutyral-co-vinylalkohol-co-vinylacetat) mit 75 bis 77 Gew.-% Vinylbutyral, 20 bis 22 Gew.-% Vinylalkohol und 3 Gew.-% Polyvinylacetat) ersetzt wird.

Die Dispersion D2 besitzt folgende Kennzahlen:

| | | |
|---|---|---|
| Feststoffgehalt | 32,5% | (1 Stunde bei 130 Grad C) |
| Basengehalt | 0,632 | Milliequivalente/g Festkörper |
| Säuregehalt | 0,387 | Milliequivalente/g Festkörper |
| pH | 5,9 | |
| Teilchengröße | 95 nm | |

### Beispiel 3.3: Herstellung der Dispersion D3

In einem Reaktor, der mit einem Rührer, Rückflußkühler, Innenthermometer und Inertgaseinleitung ausgestattet ist, werden 4955 Teile Epoxidharz auf Basis von Bisphenol A mit einem Epoxy-Equivalentgewicht (EEW) von 188 g/eq zusammen mit 1128 Teilen Bisphenol A, 270 Teilen Dodecylphenol, 334 Teilen p-Kresol, 2256 Teilen MOWITAL ® B 30 H der Fa. Hoechst AG (Komponente (B2)) und 996 Teilen Xylol unter Stickstoffatmosphäre auf 125 Grad C aufgeheizt und 10 Minuten gerührt. Anschließend heizt man auf 130 Grad C und gibt 19 Teile N,N-Dimethylbenzylamin zu. Bei dieser Temperatur wird der Reaktionsansatz gehalten, bis das EEW einen Wert von 1088 g/eq erreicht hat.
Man gibt nun 6675 Teile des Vernetzungsmittels (V1) hinzu und hält bei 100 Grad C.
Eine halbe Stunde nach Vernetzerzugabe werden 169 Teile Butylglykol und 856 Teile sec-Butanol zugesetzt.
Unmittelbar anschließend wird eine Mischung von 411 Teilen des Vorprodukts (AV1) und 419 Teilen Methylethanolamin und in den Reaktor gegeben und der Ansatz auf 100 Grad C temperiert. Nach einer weiteren halben Stunde erhöht man die Temperatur auf 105 Grad C und gibt 128 Teile N,N-Dimethylaminopropylamin zu.
45 Minuten nach Aminzugabe setzt man 751 Teile Plastilit ® 3060 (Propylenglykolverbindung der Fa. BASF AG) und 45 Teile des Additivs K2000 (Polyether der Fa. Byk Chemie) zu, verdünnt mit einem Gemisch von 419 Teilen Propylenglycolphenylether und 168 Teilen sec-Butanol, und kühlt gleichzeitig rasch auf 95 Grad C ab.
Nach 10 Minuten werden 14848 Teile des Reaktionsgemischs in ein Dispergiergefäß überführt. Dort gibt man portionsweise unter Rühren 464 Teile Milchsäure (88%ig in Wasser), gelöst in 7066 Teilen deionisiertem Wasser zu. Anschließend wird 20 Minuten homogenisiert, bevor mit weiteren 12600 Teilen entionisiertem Wasser in kleinen Portionen weiter verdünnt wird.
Durch Destillation im Vakuum werden die flüchtigen Lösemittel entfernt und anschließend mengengleich durch deionisiertes Wasser ersetzt.

Die Dispersion D3 besitzt folgende Kennzahlen:

| | | |
|---|---|---|
| Feststoffgehalt | 32,6% | (1 Stunde bei 130 Grad C) |
| Basengehalt | 0,611 | Milliequivalente/g Festkörper |
| Säuregehalt | 0,382 | Milliequivalente/g Festkörper |
| pH | 5,8 | |
| Teilchengröße | 96 nm | |

### Beispiel 3.4: Herstellung der Dispersion D4

In einem Reaktor, der mit einem Rührer, Rückflußkühler, Innenthermometer und Inertgaseinleitung ausgestattet ist, werden 5239 Teile Epoxidharz auf Basis von Bisphenol A mit einem Epoxy-Equivalentgewicht (EEW) von 188 g/eq zusammen mit 1193 Teilen Bisphenol A, 286 Teilen Dodecylphenol, 353 Teilen p-Kresol, 1176 Teilen MOWITAL ® B 30 H der Fa. Hoechst AG (Komponente (B2)) und 919 Teilen Xylol unter Stickstoffatmosphäre auf 125 Grad C aufgeheizt und 10 Minuten gerührt. Anschließend heizt man auf 130 Grad C und gibt 20 Teile N,N-Dimethylbenzylamin zu. Bei dieser Temperatur wird der Reaktionsansatz gehalten, bis das EEW einen Wert von 949 g/eq erreicht hat.

Man gibt nun 6866 Teile des Vernetzungsmittels (V1) hinzu und hält bei 100 Grad C.
Eine halbe Stunde nach Vernetzerzugabe werden 179 Teile Butylglykol und 905 Teile sec-Butanol zugesetzt.
Unmittelbar anschließend wird eine Mischung von 435 Teilen des Vorprodukts (AV1) und 443 Teilen Methylethanolamin und in den Reaktor gegeben und der Ansatz auf 100 Grad C temperiert. Nach einer weiteren halben Stunde erhöht man die Temperatur auf 105 Grad C und gibt 135 Teile N,N-Dimethylaminopropylamin zu.
45 Minuten nach Aminzugabe setzt man 930 Teile Plastilit ® 3060 (Propylenglykolverbindung der Fa. BASF AG) und 44 Teile des Additivs K2000 (Polyether der Fa. Byk Chemie) zu, verdünnt mit einem Gemisch von 701 Teilen Propylenglycolphenylether und 177 Teilen sec-Butanol, und kühlt gleichzeitig rasch auf 95 Grad C ab.
Nach 10 Minuten werden 15198 Teile des Reaktionsgemischs in ein Dispergiergefäß überführt. Dort gibt man portionsweise unter Rühren 503 Teile Milchsäure (88%ig in Wasser), gelöst in 6678 Teilen deionisiertem Wasser zu. Anschließend wird 20 Minuten homogenisiert, bevor mit weiteren 12600 Teilen entionisiertem Wasser in kleinen Portionen weiter verdünnt wird.
Durch Destillation im Vakuum werden die flüchtigen Lösemittel entfernt und anschließend mengengleich durch deionisiertes Wasser ersetzt:.

Die Dispersion D4 besitzt folgende Kennzahlen:

| | | |
|---|---|---|
| Feststoffgehalt | 32,0% | (1 Stunde bei 130 Grad C) |
| Basengehalt | 0,621 | Milliequivalente/g Festkörper) |
| Säuregehalt | 0,340 | Milliequivalente/g Festkörper |
| pH | 6,0 | |
| Teilchengröße | 87 nm | |

### Beispiel 3.5: Herstellung der Dispersion D5

In einem Reaktor, der mit einem Rührer, Rückflußkühler, Innenthermometer und Inertgaseinleitung ausgestattet ist, werden 4996 Teile Epoxidharz auf Basis von Bisphenol A mit einem Epoxy-Equivalentgewicht (EEW) von 188 g/eq zusammen mit 1138 Teilen Bisphenol A, 272 Teilen Dodecylphenol, 337 Teilen p-Kresol, 1758 Teilen Komponente (B3) (MOWITAL ® B 60 H der Fa. Hoechst AG: (Poly(vinylbutyral-co-vinylalkoholco-vinylacetat) mit 76 bis 78 Gew.-% Vinylbutyral, 19 bis 21 Gew.-% Vinylalkohol und 3 Gew.-% Polyvinylacetat) und 947 Teilen Xylol unter Stickstoffatmosphäre auf 125 Grad C aufgeheizt und 10 Minuten gerührt. Anschließend heizt man auf 130 Grad C und gibt 19 Teile N,N-Dimethylbenzylamin zu. Bei dieser Temperatur wird der Reaktionsansatz gehalten, bis das EEW einen Wert von 1026 g/eq erreicht hat.
Man gibt nun 6731 Teile des Vernetzungsmittels (V1) hinzu und hält bei 100 Grad C.
Eine halbe Stunde nach Vernetzerzugabe werden 171 Teile Butylglykol und 863 Teile sec-Butanol zugesetzt. Unmittelbar anschließend wird eine Mischung von 415 Teilen des Vorprodukts (AV1) und 422 Teilen Methylethanolamin und in den Reaktor gegeben und der Ansatz auf 100 Grad C temperiert. Nach einer weiteren halben Stunde erhöht man die Temperatur auf 105 Grad C und gibt 129 Teile N,N-Dimethylaminopropylamin zu.
45 Minuten nach Aminzugabe setzt man 758 Teile Plastilit ® 3060 (Propylenglykolverbindung der Fa. BASF) und 44 Teile des Additivs K2000 (Polyether der Fa. Byk Chemie) zu, verdünnt mit einem Gemisch von 831 Teilen Propylenglycolphenylether und 169 Teilen sec-Butanol, und kühlt gleichzeitig rasch auf 95 Grad C ab.
Nach 10 Minuten werden 15244 Teile des Reaktionsgemischs in ein Dispergiergefäß überführt. Dort gibt man portionsweise unter Rühren 481 Teile Milchsäure (88%ig in Wasser), gelöst in 6653 Teilen deionisiertem Wasser zu. Anschließend wird 20 Minuten homogenisiert, bevor mit weiteren 12600 Teilen entionisiertem Wasser in kleinen Portionen weiter verdünnt wird.
Durch Destillation im Vakuum werden die flüchtigen Lösemittel entfernt und anschließend mengengleich durch deionisier tes Wasser ersetzt.

Die Dispersion D5 besitzt folgende Kennzahlen:

| | | |
|---|---|---|
| Feststoffgehalt | 32,7% | (1 Stunde bei 130 Grad C) |
| Basengehalt | 0,625 | Milliequivalente/g Festkörper |
| Säuregehalt | 0,402 | Milliequivalente/g Festkörper |
| pH | 5,9 | |
| Teilchengröße | 189 nm | |

### Beispiel 3.6: Herstellung der Dispersion D6

In einem Reaktor, der mit einem Rührer, Rückflußkühler, Innenthermometer und Inertgaseinleitung ausgestattet ist, werden 5503 Teile Epoxidharz auf Basis von Bisphenol A mit einem Epoxy-Equivalentgewicht (EEW) von 188 g/eq zusammen mit 1253 Teilen Bisphenol A, 300 Teilen Dodecylphenol, 371 Teilen p-Kresol, 747 Teilen Komponente (B4) (MOWITAL ® B 20 H der Fa. Hoechst AG: Poly(vinylbutyral-co-vinylalkohol-covinylacetat mit 75 bis 77 Gew.-% Vinylbutyral, 20 bis 22 Gew.-% Vinylalkohol und 3 Gew.-% Polyvinylacetat) und 664 Teilen Xylol unter Stickstoffatmosphäre auf 125 Grad C aufgeheizt und 10 Minuten gerührt. Anschließend heizt man auf 130 Grad C und gibt 21 Teile N,N-Dimethylbenzylamin zu. Bei dieser Temperatur wird der Reaktionsansatz gehalten, bis das EEW einen Wert von 896 g/eq erreicht hat.
Man gibt nun 7407 Teile des Vernetzungsmittels (V1) hinzu und hält bei 100 Grad C.
Eine halbe Stunde nach Vernetzerzugabe werden 188 Teile Butylglykol und 951 Teile sec-Butanol zugesetzt.
Unmittelbar anschließend wird eine Mischung von 430 Teilen des Vorprodukts (AV1) und 465 Teilen Methylethanolamin und in den Reaktor gegeben und der Ansatz auf 100 Grad C temperiert. Nach einer weiteren halben Stunde erhöht man die Temperatur auf 105 Grad C und gibt 142 Teile N,N-Dimethylaminopropylamin zu.
45 Minuten nach Aminzugabe setzt man 834 Teile Plastilit ® 3060 (Propylenglykolverbindung der Fa. BASF) und 75 Teile des Additivs K2000 (Polyether der Fa. Byk Chemie) zu, verdünnt mit einem Gemisch von 465 Teilen Propylenglycolphenylether und 186 Teilen sec-Butanol, und kühlt gleichzeitig rasch auf 95 Grad C ab.
Nach 10 Minuten werden 14926 Teile des Reaktionsgemischs in ein Dispergiergefäß überführt. Dort gibt man portionsweise unter Rühren 491 Teile Milchsäure (88%ig in Wasser), gelöst in 6961 Teilen deionisiertem Wasser zu. Anschließend wird 20 Minuten homogenisiert, bevor mit weiteren 12600 Teilen entionisiertem Wasser in kleinen Portionen weiter verdünnt wird.
Durch Destillation im Vakuum werden die flüchtigen Lösemittel entfernt und anschließend mengengleich durch deionisiertes Wasser ersetzt.

Die Dispersion D6 besitzt folgende Kennzahlen:

| | | |
|---|---|---|
| Feststoffgehalt | 31,8% | (1 Stunde bei 130 Grad C) |
| Basengehalt | 0,682 | Milliequivalente/g Festkörper |
| Säuregehalt | 0,346 | Milliequivalente/g Festkörper |
| pH | 6,1 | |
| Teilchengröße | 77nm | |

### Beispiel 3.7: Herstellung der Dispersion D7

In einem Reaktor, der mit einem Rührer, Rückflußkühler, Innenthermometer und Inertgaseinleitung ausgestattet ist, werden 5504 Teile Epoxidharz auf Basis von Bisphenol A mit einem Epoxy-Equivalentgewicht (EEW) von 188 g/eq zusammen mit 1253 Teilen Bisphenol A, 300 Teilen Dodecylphenol, 371 Teilen p-Kresol, 1117 Teilen MOWITAL B 30 H ® der Fa. Hoechst AG (Komponente (B2)) und 952 Teilen Xylol unter Stickstoffatmosphäre auf 125 Grad C aufgeheizt und 10 min gerührt. Anschließend heizt man auf 130 Grad C und gibt 20 Teile N,N-Dimethylbenzylamin zu. Bei dieser Temperatur wird der Reaktionsansatz gehalten, bis das EEW einen Wert von 936 g/eq erreicht hat.
Man gibt nun 6311 Teile des Vernetzungsmittels (V1) hinzu und hält bei 100 Grad C.
Eine halbe Stunde nach Vernetzerzugabe werden 188 Teile Butylglykol und 951 Teile sec-Butanol zugesetzt. Unmittelbar anschließend wird eine Mischung von 484 Teilen des Vorprodukts (AV1) und 465 Teilen Methylethanolamin und in den Reaktor gegeben und der Ansatz auf 100 Grad C temperiert. Nach einer weiteren halben Stunde erhöht man die Temperatur auf 105 Grad C und gibt 142 Teile N,N-Dimethylaminopropylamin zu.
45 Minuten nach Aminzugabe setzt man 787 Teile Plastilit ® 3060 (Propylenglykolverbindung, Fa. BASF) und 73 Teile des Additivs K2000 (Polyether, Fa. Byk Chemie) zu, verdünnt mit einem Gemisch von 466 Teilen Propylenglycolphenylether und 186 Teilen sec-Butanol, gibt 430 Teile Dibutylzinndilaurat in den Reaktor und kühlt gleichzeitig rasch auf 95 Grad C ab.
Nach 10 Minuten werden 14926 Teile des Reaktionsgemischs in ein Dispergiergefäß überführt. Dort gibt man portionsweise unter Rühren 455 Teile Milchsäure (88%ig in Wasser), gelöst in 6998 Teilen deionisiertem Wasser zu. Anschließend wird 20 Minuten homogenisiert, bevor mit weiteren 12600 Teilen entionisiertem Wasser in kleinen Portionen weiter verdünnt wird.
Durch Destillation im Vakuum werden die flüchtigen Lösemittel entfernt und anschließend mengengleich durch deionisiertes Wasser ersetzt.

Die Dispersion D7 besitzt folgende Kennzahlen:

| | | |
|---|---|---|
| Feststoffgehalt | 32,9% | (1 Stunde bei 130 Grad C) |
| Basengehalt | 0,753 | Milliequivalente/g Festkörper |
| Säuregehalt | 0,475 | Milliequivalente/g Festkörper |
| pH | 6,0 | |
| Teilchengröße | 158 nm | |

### Beispiel 4: Herstellung wäßriger Dispersionen DV, enthaltend Bindemittel des Standes der Technik und das Vernetzungsmittel

### Beispiel 4.1: Herstellung der Dispersion DV1

In einem Reaktor, der mit einem Rührer, Rückflußkühler, Innenthermometer und Inertgaseinleitung ausgestattet ist, werden 5797 Teile Epoxidharz auf Basis von Bisphenol A mit einem Epoxy-Equivalentgewicht (EEW) von 188 g/eq zusammen mit 1320 Teilen Bisphenol A, 316 Teilen Dodecylphenol, 391 Teilen p-Kresol und 413 Teilen Xylol unter Stickstoffatmosphäre auf 125 Grad C aufgeheizt und 10 Minuten gerührt. Anschließend heizt man auf 130 Grad C und gibt 22 Teile N,N-Dimethylbenzylamin zu. Bei dieser Temperatur wird der Reaktionsansatz gehalten, bis das EEW einen Wert von 814 g/eq erreicht hat.
Man gibt nun 7810 Teile des Vernetzungsmittels (V1) gemäß Beispiel 1 hinzu und hält bei 100 Grad C.
Eine halbe Stunde nach Vernetzerzugabe werden 198 Teile Butylglykol und 1002 Teile sec-Butanol zugesetzt.
Unmittelbar anschließend wird eine Mischung von 481 Teilen des Vorprodukts (AV1) gemäß Beispiel 2 und 490 Teilen Methylethanolamin und in den Reaktor gegeben und der Ansatz auf 100 Grad C temperiert. Nach einer weiteren halben Stunde erhöht man die Temperatur auf 105 Grad C und gibt 150 Teile
N,N-Dimethylaminopropylamin zu.
45 Minuten nach Aminzugabe setzt man 879 Teile Plastilit ® 3060 (Propylenglykolverbindung, Fa. BASF) und 45 Teile des Additivs K2000 (Polyether, Fa. Byk Chemie) zu, verdünnt mit einem Gemisch von 490 Teilen Propylenglycolphenylether und 196 Teilen sec-Butanol, und kühlt gleichzeitig rasch auf 95 Grad C ab.
Nach 10 Minuten werden 14930 Teile des Reaktionsgemischs in ein Dispergiergefäß überführt. Dort gibt man portionsweise unter Rühren 455 Teile Milchsäure (88%ig in Wasser), gelöst in 6993 Teilen deionisiertem Wasser zu. Anschließend wird 20 Minuten homogenisiert, bevor mit weiteren 12600 Teilen entionisiertem Wasser in kleinen Portionen weiter verdünnt wird.
Durch Destillation im Vakuum werden die flüchtigen Lösemittel entfernt und anschließend mengengleich durch deionisiertes Wasser ersetzt.

Die Dispersion DV1 besitzt folgende Kennzahlen:

| | | |
|---|---|---|
| Feststoffgehalt | 31,9% | (1 Stunde bei 130 Grad C) |
| Basengehalt | 0,69 | Milliequivalente/g Festkörper |
| Säuregehalt | 0,32 | Milliequivalente/g Festkörper |
| pH | 6,2 | |
| Teilchengröße | 113 nm | |

### Beispiel 4.2: Herstellung der Dispersion DV2

In einem Reaktor, der mit einem Rührer, Rückflußkühler, Innenthermometer und Inertgaseinleitung ausgestattet ist, werden 6020 Teile Epoxidharz auf Basis von Bisphenol A mit einem Epoxy-Equivalentgewicht (EEW) von 188 g/eq zusammen mit 1371 Teilen Bisphenol A, 328 Teilen Dodecylphenol, 406 Teilen p-Kresol und 429 Teilen Xylol unter Stickstoffatmosphäre auf 125 Grad C aufgeheizt und 10 Minuten gerührt. Anschließend heizt man auf 130 Grad C und gibt 22 Teile N,N-Dimethylbenzylamin zu. Bei dieser Temperatur wird der Reaktionsansatz gehalten, bis das EEW einen Wert von 814 g/eq erreicht hat.
Man gibt nun 6903 Teile des Vernetzungsmittels (V1) hinzu und hält bei 100 Grad C.
Eine halbe Stunde nach Vernetzerzugabe werden 206 Teile Butylglykol und 1040 Teile sec-Butanol zugesetzt.
Unmittelbar anschließend wird eine Mischung von 529 Teilen des Vorprodukts (AV1) und 509 Teilen Methylethanolamin und in den Reaktor gegeben und der Ansatz auf 100 Grad C temperiert. Nach einer weiteren halben Stunde erhöht man die Temperatur auf 105 Grad C und gibt 155 Teile N,N-Dimethylaminopropylamin zu.
45 Minuten nach Aminzugabe setzt man 861 Teile Plastilit ® 3060 (Propylenglykolverbindung, Fa. BASF) und 73 Teile des Additivs K2000 (Polyether, Fa. Byk Chemie) zu, verdünnt mit einem Gemisch von 509 Teilen Propylenglycolphenylether und 204 Teilen sec-Butanol, gibt 435 Teile Dibutylzinndilaurat in den Reaktor und kühlt gleichzeitig rasch auf 95 Grad C ab.
Nach 10 Minuten werden 14784 Teile des Reaktionsgemischs in ein Dispergiergefäß überführt. Dort gibt man portionsweise unter Rühren 474 Teile Milchsäure (88%ig in Wasser), gelöst in 7120 Teilen deionisiertem Wasser zu. Anschließend wird 20 Minuten homogenisiert, bevor mit weiteren 12600 Teilen entionisiertem Wasser in kleinen Portionen weiter verdünnt wird.
Durch Destillation im Vakuum werden die flüchtigen Lösemittel entfernt und anschließend mengengleich durch deionisiertes Wasser ersetzt.

Die Dispersion DV2 besitzt folgende Kennzahlen:

| | | |
|---|---|---|
| Feststoffgehalt: | 32,6% | (1 Stunde bei 130 Grad C) |
| Basengehalt: | 0,783 | Milliequivalente/g Festkörper |
| Säuregehalt: | 0,473 | Milliequivalente/g Festkörper |
| pH: | 6,3 | |
| Teilchengröße: | 102 nm | |

### Beispiel 5: Herstellung von Pigmentpasten PP

### Beispiel 5.1: Herstellung einer Reibharzlösung RL

Gemäß EP 0 505 445 Bl, Beispiel 1.3, wird eine organischwässrige Reibharzlösung RL hergestellt, indem man in der ersten Sufe 2598 Teile Bisphenol-A-diglycidylether (Epoxy-Equivalentgewicht (EEW): 188 g/eq), 787 Teile Bisphenol-A, 603 Teile Dodecylphenol und 206 Teile Butylglykol in Gegenwart von 4 Teilen Triphenylphosphin bei 130 bis zu einem EEW von 865 g/eq reagieren läßt. Während des Abkühlens wird mit 849 Teilen Butylglykol und 1534 Teilen D.E.R. 732 (Polypropylenglykoldiglycidylether der Fa. DOW Chemical) verdünnt und bei 90 Grad C mit 266 Teilen 2,2'-Aminoethoxyethanol und 212 Teilen N,N-Dimethylaminopropylamin weiterreagiert. Nach 2 Stunden ist die Viskosität der Harzlösung konstant (5,3 dPa·s; 40%ig in Solvenon ® PM (Methoxypropanol der Fa. BASF AG); Platte-Kegel-Viskosimeter bei 23 Grad C). Man verdünnt mit 1512 Teilen Butylglykol und teilneutralisiert die Basengruppen mit 201 Teilen Eisessig, verdünnt weiter mit 1228 Teilen entionisiertem Wasser und trägt aus. Man erhält so eine 60%ige wässrig-organische Reibharzlösung RL, deren 10%ige Verdünnung einen pH von 6,0 aufweist.
Die Reibharzlösung RL wird im folgenden zur Pastenherstellung eingesetzt.

### Beispiel 5.2: Herstellung einer grauen Pigmentpaste PP1

Dazu werden zunächst 280 Teile Wasser und 250 Teile der vorstehend beschriebenen Reibharzlösung vorgemischt. Nun werden 5 Teile Ruß, 35 Teile basisches Bleisilikat BSWL ® 202 (Fa. Chemag; Deutschland), 90 Teile Extender HEWP R (Fa. English China Clay Int., Great Britain), 315 Teile Titandioxid TI-PURE ® 900 (Fa. DuPont, USA), 5 Teile Bentone R EW (Fa. Rheox, Deutschland) und 20 Teile Di-n-butylzinnoxid zugegeben. Die Mischung wird 30 Minuten lang unter einem schnellaufenden Dissolverrührwerk vordispergiert. Anschließend wird die Mischung in einer Laborkleinmühle (Motor Mini Mill, Fa. Eiger Engineering Ltd., Great Britain) während 1 bis 1,5 Stunden bis zu einer Hegmann-Feinheit von kleiner/gleich 12 dispergiert und mit weiterem Wasser auf Verarbeitungsviskosität eingestellt.
Es wird die entmischungsstabile Pigmentpaste PP1 erhalten.

### Beispiel 5.3: Herstellung einer schwarzen Pigmentpaste PP2

Gemäß EP 0 505 445 B1, Beispiel 7 werden zunächst 407 Teile Wasser, 170 Teile der vorstehend beschriebenen Reibharzlösung RL und 4 Teile Essigsäure (90%ig) vorgemischt. Danach werden 21 Teile Ruß, 42 Teile basisches Bleisilikat BSWL ® 202 (Fa. Chemag; Deutschland), 341 Teile Extender Blanc fixe micro ® (Fa. Sachtleben Chemie; Deutschland) und 15 Teile Di-n-butylzinnoxid zugegeben. Die Mischung wird 30 Minuten unter einem schnellaufenden Dissolverrührwerk vordispergiert. Anschließend wird die Mischung in einer Laborkleinmühle (Motor Mini Mill, Fa. Eiger Engineering Ltd., Great Britain) während 1 bis 1,5 Stunden bis zu einer Hegmann-Feinheit von kleiner/gleich 12 dispergiert und mit weiterem Wasser auf Verarbeitungsviskosität eingestellt.
Es wird die entmischungsstabile Pigmentpaste PP2 erhalten.

### Beispiel 6: Herstellung der erfindungsgemäßen Elektrotauchlacke

### Beipsiel 6.1: Herstellung pigmentierter Elektrotauchlacke

### Beispiel 6.1.1: Herstellung grauer Elektrotauchlacke

Es werden mit Dispersionen gemäß Beispielen 3 und 4 nachfolgende graue Elektrotauchlacke G0 bis G5, bestehend aus Mischungen von jeweils

| | | |
|---|---|---|
| (G0) | 2606 Teilen der Dispersion DV1 | (Beispiel 4.1), |
| (G1) | 2543 Teilen der Dispersion D1 | (Beispiel 3.1), |
| (G2) | 2558 Teilen der Dispersion D2 | (Beispiel 3.2), |
| (G3) | 2550 Teilen der Dispersion D3 | (Beispiel 3.3), |
| (G4) | 2543 Teilen der Dispersion D5 | (Beispiel 3.5), |
| (G5) | 2614 Teilen der Dispersion D6 | (Beispiel 3.6) |

und 1500 Teilen deionisiertem Wasser sowie 25 Teilen einer 10 %igen wäßrigen Milchsäurelösung hergestellt.
Zu den so entstandenen Mischungen werden 646 Teile der grauen Pigmentpaste PP1 gemäß Beispiel 5.2 unter Rühren zugesetzt. Der so erhaltene Elektrotauchlack wird mit deionisiertem Wasser auf 5000 Teile aufgefüllt.

### Beispiel 6.1.2: Herstellung schwarzer Elektrotauchlacke

Es werden von Dispersionen gemäß den Beispielen 3 und 4 nachfolgende schwarze Elektrotauchlackbäder S0 und S1, bestehend aus Mischungen von jeweils

| | | |
|---|---|---|
| (S0) | 2606 Teilen der Dispersion DV1 | (Beispiel 4.1), |
| (S1) | 2598 Teilen der Dispersion D4 | (Beispiel 3.4) |

und 1500 Teilen deionisiertem Wasser sowie 25 Teilen einer 10 %igen wäßrigen Milchsäurelösung hergestellt.
Zu den so entstandenen Mischungen werden 720 Teile der schwarzen Pigmentpaste PP2 gemäß Beispiel 5.3 unter Rühren zugesetzt. Der so erhaltene Elektrotauchlack wird mit deionisiertem Wasser auf 5000 Teile aufgefüllt.

### Beispiel 6.2: Herstellung unpigmentierter Elektrotauchlacke (Klarlacke)

Es werden von Dispersionen gemäß Beispielen 3 und 4 nachfolgende unpigmentierte Elektrotauchlackbäder K0 und K1, bestehend aus Mischungen von jeweils

| | |
|---|---|
| (K0) | 2301 Teilen der Dispersion DV2 (Beispiel 4.2) und 2699 Teilen deionisiertem Wasser, |
| | |
| (K1) | 2280 Teilen der Dispersion D7 (Beispiel 3.7) und 2720 Teilen deionisiertem Wasser, |

hergestellt.

### Beispiel 7: Abscheidung der Elektrotauchlacke

Nach 5 Tagen Alterung bei Raumtemperatur wird auf einer kathodisch geschalteten Stahlprüftafel mit 150 Ohm Vorwiderstand abgeschieden.
Zu diesen Zweck wurden Stahlprüftafel und wassergespülte, zinkphosphatierte Stahlprüftafel der Fa. Chemetall (Bo26 W OC) verwendet. Die Abscheidezeit beträgt 2 Minuten bei einer Badtemperatur von 30 Grad C. Die Abscheidespannung wurde so gewählt, daß eine Schichtdicke des eingebrannten Lackfilms von ca. 20 Mikrometer resultiert.
Der abgeschiedene Lackfilm wird mit deionisiertem Wasser abgespült und 20 Minuten bei 180 Grad C eingebrannt. Die so erhaltenen eingebrannten Lackfilme wurden geprüft.
Die Prüfergebnisse sind den Tabellen 1 und 2 angeführt.

**Tabelle 1:**

| Prüfergebnisse grauer und schwarzer Elektrotauchlackbäder | | | | | | | |
|---|---|---|---|---|---|---|---|
| **Elektrotauchlackbad** | ***G0*** | **G1** | **G2** | **G3** | **G4** | ***S0*** | **S1** |
| Dispersion | *DV1* | D1 | D2 | D3 | D5 | *DV1* | D4 |
| Vergleichsbeispiele ohne Polyvinylacetal-Copolymerisat | *X* | | | | | *X* | |
| **wassergespülte, zinkphosphatierte Stahlprüftafel**^{**(0)**} | | | | | | | |
| Schichtdicke | *20,2* | 21,8 | 18,5 | 23,6 | 19,2 | *20,9* | 20,2 |
| (Trockenfilm) in µm bei Spannung in V | *300* | 320 | 310 | 350 | 320 | *300* | 300 |
| 10 Zyklen Klimawechseltest ⁽¹⁾ | | | | | | | |
| Unterwanderung am Ritz in mm ⁽²⁾ | *2,4* | 2,1 | 2,1 | 2,0 | 2,2 | *2,8* | 2,3 |
| Flächenrost ⁽³⁾ | *1* | 1 | 1 | 1 | 1 | *1* | 1 |
| Kantenrost ⁽⁴⁾ | *4* | 1 | 1 | 1 | 1 | *3* | 1 |
| Elektrische Gütezahl ⁽⁵⁾ in % | *5* | 59 | 89 | 99 | 100 | *4* | 97 |
| Verlauf ⁽⁶⁾ | *2* | 3 | 3 | 3 | 3 | *2* | 3 |
| **blanke Stahlprüftafel** Schichtdicke | *20,7* | 20,2 | 18,0 | 18,2 | 24,3 | *20,9* | 20,8 |
| (Trockenfilm) in *µ*m bei Spannung in V | *210* | 240 | 200 | 220 | 200 | *220* | 200 |
| Salzsprühnebelbelastung nach 360h ⁽⁷⁾ | | | | | | | |
| Unterwanderung am Ritz in mm ⁽²⁾ | *0,5* | 0,7 | 0,5 | 0,5 | 0,7 | *0,8* | 0,6 |
| Kantenrost ⁽⁴⁾ | *5* | 2 | 1 | 1 | 1 | *5* | 1 |

**Tabelle 2:**

| Prüfergebnisse grauer und unpigmentierter Elektrotauchlackbäder | | | | |
|---|---|---|---|---|
| **Elektrotauchlackbad** | ***G0*** | **G5** | ***K0*** | **K1** |
| Dispersion | *DV1* | D6 | *DV2* | *D7* |
| Vergleichsbeispiele ohne Polyvinylacetal-Copolymerisat | *X* | | *X* | |
| **wassergespülte, zinkphos-phatierte Stahlprüftafel**^{**(0)**} | | | | ^{(*)} |
| Schichtdicke (Trockenfilm) in *µ*m | *20,2* | 21,8 | *22,0* | 20,0 |
| bei Spannung in V | *300* | 320 | *400* | 425 |
| Verlauf ⁽⁶⁾ | *2* | *2* | *1* | 1 |
| Reverse Impact | *20* | 40 | *60* | 160 |
| in inch pound ⁽⁸⁾ | | | | |
| MB-Kugelschuß bei -20°C ⁽⁹⁾ | | | | |
| Abplatzung | *7,5* | 6,8 | *6,2* | 6,0 |
| in mm^{2 (9)} | | | | |
| Rostgrad (Note 0-5) ^{(9,10)} | *4* | 1 | *4* | 1 |
| Ford-Umgriff ⁽¹¹⁾ | | | | |
| Außenschichtdicke in µm | *21,0* | 22,1 | *24,0* | 18,4 |
| Reichweite in cm | *22,9* | 24,7 | *24,8* | 26,0 |
| Korrosionslinie in cm | *21,4* | 23,0 | *19,5* | 26,0 |

| | | | | |
|---|---|---|---|---|
| ^{(*)} :Abscheidung bei 31°C | | | | |

### Legende zu Tabellen 1 und 2:

(0):Wassergespülte, zinkphosphatierte Stahlprüftafel: B026 W60 OC (Firma Chemetall), Wasserspülung pH=6,0
(1):10 Zyklen Klimawechseltest:
(2):Unterwanderung [nun] = (Gesamtunterwanderung [mm] - Ritzstärke [mm]) : 2
(3):Visuelle Beurteilung: 0 = bester Wert; 5 = schlechtester Wert
(4):Visuelle Beurteilung: 0 = bester Wert; 5 = schlechtester Wert
(5):Diese Zahl wird ermittelt, indem eine Spannung von 50 bis 1000 V an die beschichtete Kante gelegt und die Isolierwirkung gegen Durchschlag bestimmt wird. Je höher die elektrische Gütezahl ist, desto höher ist die Isolierwirkung. Je höher die Isolierwirkung ist, desto besser ist die Kante mit einem Elektrotauchlackfilm beschichtet.
(6):Visuelle Beurteilung: 1 = bester Wert; 5 = schlechtester Wert
(7):Bestimmung nach ASTM B 117
(8):Bestimmung nach ASTM D 2794 (nach Alterung bei 80 Grad C)
(9):Nach Mercedes Benz-Spezifikation LPV 5200.40701: Aufbau: Polyurethan-Füller/Metallic Wasserbasislack/ 1K - High Solid Klarlack
(10):Visuelle Beurteilung: 0 = bester Wert; 5 = schlechtester Wert
(11):Ford-Umgriff nach F/02-EU BI 20-2

## Patentansprüche

1. Elektrotauchlacke enthaltend ein Bindemittel BM, bestehend aus
| | | |
|---|---|---|
| (A) | 1 bis 99,9 Gew.-% | eines Epoxidharzes und |
| (B) | 0,1 bis 99 Gew.-% | eines Copolymerisats aus Vinylacetat und mindestens einer weiteren Komponente, ausgewählt aus der Gruppe Vinylalkohol, Alkylvinylacetal und Ethylen, |
hergestellt durch intensives Mischen der Komponenten (A) und (B) des Bindemittels BM, vor deren Einsatz im Elektrotauchlack, in einem Lösungsmittel und/oder in der Schmelze, wobei die während des Mischens der Komponenten (A) und (B) nicht umgesetzten Epoxygruppen des Bindemittels BM in einem zweiten Schritt mit Verbindungen, die Amino- und/oder Carboxylgruppen, tragen, welche nach der Umsetzung mit den Epoxygruppen durch Neutralisation in ionische Gruppen überführbar sind, teilweise oder vollständig umgesetzt werden.

2. Elektrotauchlack nach Anspruch 1, dadurch gekennzeichnet, daß beim Mischvorgang Epoxy-Ringöffnungskatalysatoren eingesetzt werden.

3. Elektrotauchlack nach Anspruch 1 oder 2, dadurch gekennzeichnet, daß die Komponenten (A) und (B) bei Temperaturen zwischen 15 und 250 Grad C, vorzugsweise zwischen 70 und 200 Grad C gemischt werden.

4. Elektrotauchlack nach einem der Ansprüche 1 bis 3, dadurch gekennzeichnet, daß das Epoxidharz (A) ein Epoxidäquivalentgewicht zwischen 170 und 10.000 g/eq aufweist.

5. Elektrotauchlack nach einem der Ansprüche 1 bis 4, dadurch gekennzeichnet, daß das Epoxidharz (A) eine Polyglycidylether eines cyclischen Polyols, vorzugsweise eines Polyphenols, und/oder das Umsetzungsprodukt eines Glycidylethers eines Polyphenols mit aliphatischen und/oder alicyclischen Verbindungen ist.

6. Elektrotauchlack nach einem der Ansprüche 1 bis 5, dadurch gekennzeichnet, daß das Copolymerisat (B) aufgebaut ist aus:
(b1) 0 bis 5000 Monomereinheiten Alkylvinylacetal der Formel (I): 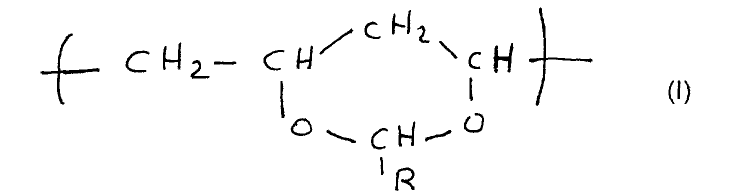 mit R für einen C1-bis C11-Alkylrest,
(b2) 3 bis 6500 Monomereinheiten Vinylacetat,
(b3) 0 bis 12500 Monomereinheiten Vinylalkohol und
(b4) 0 bis 20000 Monomereinheiten Ethylen.

7. Elektrotauchlack nach Anspruch 6, dadurch gekennzeichnet, daß das Copolymerisat (B) aufgebaut ist aus:
(b1) 3 bis 4600 Monomereinheiten Vinylacetal der Formel (1),
(b2) 3 bis 6200 Monomereinheiten Vinylacetat und
(b3) 0 bis 12100 Monomereinheiten Vinylalkohol.

8. Elektrotauchlack nach Anspruch 7, dadurch gekennzeichnet, daß das Copolymerisat (B) aufgebaut ist aus:
(b2) 3 bis 6200 Monomereinheiten Vinylacetat,
(b3) 0 bis 12100 Monomereinheiten Vinylalkohol und
(b4) 3 bis 18000 Monomereinheiten Ethylen.

9. Elektrotauchlack nach den Ansprüchen 1 bis 8, dadurch gekennzeichnet, daß die Elektrotauchlacke neben den an sich bekannten Bestandteilen Pigmentfarbstoffe und/oder Füllstoffe enthalten.

10. Verfahren zum Lackieren elektrisch leitfähiger Substrate, bei dem
(1) das elektrisch leitfähige Substrat in einem wäßrigen Elektrotauchlack getaucht wird,
(2) das Substrat als Kathode geschaltet wird,
(3) durch Gleichstrom ein Film auf dem Substrat abgeschieden wird,
(4) das lackierte Substrat aus dem Elektrotauchlack entfernt wird und
(5) der abgeschiedene Lackfilm eingebrannt wird,
dadurch gekennzeichnet, daß in Stufe (1) des Verfahrens ein Elektrotauchlack gemäß den Ansprüche 1 bis 9 eingesetzt wird.

11. Verwendung der Elektrotauchlack gemäß den Ansprüchen 1 bis 9 und des Verfahrens zum Lackieren der Elektrotauchlacke gemäß Anspruch 10 zur Herstellung mehrschichtiger Lackaufbauten auf elektrisch leitenden Substraten, insbesondere auf Metallsubstraten.

## Claims

1. Electrodeposition coating materials comprising a binder BM, consisting of:
| | | |
|---|---|---|
| (A) | from 1 to 99.9% by weight | of an epoxy resin and |
| (B) | from 0.1 to 99% by weight | of a copolymer of vinyl acetate and at least one further component selected from the group vinyl alcohol, alkylvinyl acetal and ethylene, |
prepared by intensive mixing of components (A) and (B) of the binder BM in a solvent and/or in the melt before they are used in the electrodeposition coating material the epoxy groups of the binder BM which have not reacted during the mixing of components (A) and (B) being reacted partially or completely, in a second step, with compounds which carry amino and/or carboxyl groups which, following the reaction with the epoxy groups, can be converted to ionic groups by neutralization.

2. Electrodeposition coating material according to claim 1, characterized in that epoxy ring-opening catalysts are employed during the mixing operation.

3. Electrodeposition coating material according to claim 1 or 2, characterized in that components (A) and (B) are mixed at temperatures between 15 and 250 degrees C, preferably between 70 and 200 degrees C.

4. Electrodeposition coating material according to one of claims 1 to 3, characterized in that the epoxy resin (A) has an epoxide equivalent weight of between 170 and 10,000 g/eq.

5. Electrodeposition coating material according to one of claims 1 to 4, characterized in that the epoxy resin (A) is a polyglycidyl ether of a cyclic polyol, preferably of a polyphenol, and/or the reaction product of a glycidyl ether of a polyphenol with aliphatic and/or alicyclic compounds.

6. Electrodeposition coating material according to one of claims 1 to 5, characterized in that the copolymer (B) is composed of:
(b1) from 0 to 5000 monomer units of alkylvinyl acetal of the formula (I) 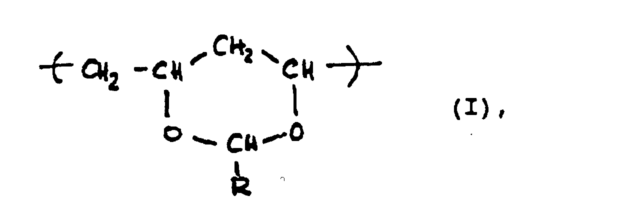 where R is a C1- to C11-alkyl radical,
(b2) from 3 to 6500 monomer units of vinyl acetate,
(b3) from 0 to 12,500 monomer units of vinyl alcohol and
(b4) from 0 to 20,000 monomer units of ethylene.

7. Electrodeposition coating material according to claim 6, characterized in that the copolymer (B) is composed of:
(b1) from 3 to 4600 monomer units of vinyl acetal of the formula (I),
(b2) from 3 to 6200 monomer units of vinyl acetate and
(b3) from 0 to 12,100 monomer units of vinyl alcohol.

8. Electrodeposition coating material according to claim 7, characterized in that the copolymer (B) is composed of:
(b2) from 3 to 6200 monomer units of vinyl acetate,
(b3) from 0 to 12,100 monomer units of vinyl alcohol, and
(b3) from 3 to 18,000 monomer units of ethylene.

9. Electrodeposition coating material according to claims 1 to 8, characterized in that in addition to the constituents which are known per se the electrodeposition coating materials comprise pigment colorants and/or fillers.

10. Process for coating electrically conductive substrates, in which
(1) the electrically conductive substrate is immersed in an aqueous electrodeposition coating material,
(2) the substrate is connected as cathode,
(3) by means of direct current, a film is deposited on the substrate,
(4) the coated substrate is removed from the electrodeposition coating material, and
(5) the deposited coating film is stoved,
characterized in that in stage (1) of the process an electrodeposition coating material according to claims 1 to 9 is employed.

11. Use of the electrodeposition coating material according to claims 1 to 9 and of the process for coating the electrodeposition coating materials according to claim 10 for producing multicoat paint systems on the electrically conducting substrates, especially on metal substrates.

## Revendications

1. Peintures électro-phorétiques comprenant un liant BM constitué de
| | | |
|---|---|---|
| (A) | de 1 à 99,9% en poids | d'une résine époxy et |
| (B) | de 0,1 à 99% en poids · | d'un copolymère d'acétate de vinyle et d'au moins un autre composant, choisi parmi le groupe constitué de l'alcool vinylique, d'un alkylvinylacétal et de l'éthylène, |
préparées en mélangeant intensivement les composants (A) et (B) du liant BM, avant leur utilisation dans la peinture électro-phorétique, dans un solvant et/ou dans la masse fondue, les groupes époxy du liant BM n'ayant pas réagi lors du mélange des composants (A) et (B) étant mis à réagir en partie ou entièrement, dans une deuxième étape, avec des composés renfermant des groupes amino et/ou carboxy qui peuvent être transformés en groupes ioniques par neutralisation, après la réaction avec les groupes époxy.

2. Peinture électrophorétique selon la revendication 1, caracterisée en ce que l'on utilise des catalyseurs de décyclisation d'époxy lors de l'opération de mélange.

3. Peinture électrophorétique selon la revendication 1 ou 2, caracterisée en ce que les composants (A) et (B) sont mélangés à des températures comprises entre 15 et 250 degrés C, de préférence entre 70 et 200 degrés C.

4. Peinture électrophorétique selon l'une quelconque des revendications 1 à 3, caracterisée en ce que la résine époxy (A) présente un poids équivalent d'époxy compris entre 170 et 10.000 g/éq.

5. Peinture électrophorétique selon l'une quelconque des revendications 1 à 4, caracterisée en ce que la résine époxy (A) est un éther polyglycidylique d'un polyol cyclique, de préférence d'un polyphénol, et/ou le produit de réaction d'un éther glycidylique d'un polyphénol avec des composés aliphatiques et/ou alicycliques.

6. Peinture électrophorétique selon l'une quelconque des revendications 1 à 5, caracterisée en ce que le copolymère (B) est composé de :
(b1) de 0 à 5 000 motifs monomères alkylvinylacétal de formule (I) : 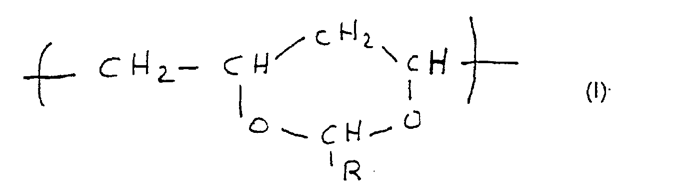
dans laquelle R désigne un radical alkyle en C1 à C11,
(b2) de 3 à 6 500 motifs monomères acétate de vinyle,
(b3) de 0 à 12 500 motifs monomères alcool vinylique et
(b4) de 0 à 20 000 motifs monomères éthylène.

7. Peinture électrophorétique selon la revendication 6, caracterisée en ce que le copolymère (B) est composé de :
(b1) de 3 à 4 600 motifs monomères vinylacétal de formule (I),
(b2) de 0 à 6 200 motifs monomères acétate de vinyle et
(b3) de 0 à 12 100 motifs monomères alcool vinylique.

8. Peinture électrophorétique selon la revendication 7, caracterisée en ce que le copolymère (B) est composé de :
(b2) de 3 à 6 200 motifs monomères acétate de vinyle,
(b3) de 0 à 12 100 motifs monomères alcool vinylique et
(b4) de 3 à 18 000 motifs monomères éthylène.

9. Peinture électrophorétique selon les revendications 1 à 8, caracterisée en ce que les peintures électrophorétiques comprennent des colorants pigmentés et/ou des charges en plus des constituants connus en soi.

10. Procédé de peinture de substrats électriquement conducteurs, dans lequel
(1) le substrat électriquement conducteur est immergé dans une peinture électrophorétique aqueuse,
(2) le substrat est relié en tant que cathode,
(3) un film est déposé sur le substrat par un courant continu,
(4) le substrat peint est retiré de la peinture électrophorétique et
(5) le film de peinture déposé est cuit,
caractérisé en ce que dans l'étape (1) du procédé, on utilise une peinture électrophorétique selon les revendications 1 à 9.

11. L'utilisation de la peinture électrophorétique selon les revendications 1 à 9 et du procédé d'application des peintures électrophorétiques selon la revendication 10 pour la production de systèmes de peintures multicouches sur des substrats électriquement conducteurs, en particulier sur des substrats métalliques.
